# EUROPÄISCHE PATENTSCHRIFT

(11) **EP 2 308 717 B1**
(45) Veröffentlichungstag und Bekanntmachung des Hinweises auf die Patenterteilung: **23.09.2015**
(21) Anmeldenummer: 10011239.0
(22) Anmeldetag: 28.09.2010
(51) Int. Cl.: B60N 2/46, B60N 2/24

(54) **Verstellbare Armlehne einer mobilen Arbeitsmaschine, insbesondere eines Flurförderzeugs**
Adjustable armrest of a mobile work machine, in particular an industrial truck
Accoudoir réglable d'une machine de travail mobile, notamment d'un chariot de manutention

(30) Priorität: 08.10.2009 DE 102009048629
(43) Veröffentlichungstag der Anmeldung: 13.04.2011
(73) Patentinhaber: Linde Material Handling GmbH, 63743 Aschaffenburg (DE)
(72) Erfinder: Meidhof, Wolfgang, 63768 Hösbach (DE); Finn, Christian, 63924 Rüdenau (DE); Lang, Lothar, 63768 Hösbach (DE)
(74) Vertreter: Geirhos, Johann

(56) Entgegenhaltungen:
- EP-A2- 1 225 089
- WO-A1-96/33452
- DE-A1-102005 023 890

## Beschreibung

Die Erfindung betrifft eine verstellbare Armlehne einer mobilen Arbeitsmaschine nach dem Oberbegriff des Patentanspruchs 1.

Eine gattungsgemäße verstellbare Armlehne ist aus der US 2005/0006942 A1 bekannt. Die Armlehne weist einen zweiten Tragkörper auf, der in horizontaler und/oder vertikaler Richtung verstellbar an einem ersten Tragkörper verschiebbar angeordnet ist. Eine Führungsvorrichtung ist von Lagerbolzen gebildet, die an dem ersten Tragkörper befestigt sind und mit Führungsnuten des verschiebbaren zweiten Tragkörpers zusammenwirken. Eine von einer Klemmschraube mit einem Sterngriff gebildete Klemmeinrichtung dient zur kraftschlüssigen Verklemmung der beiden plattenförmigen Tragkörper gegeneinander. Die Klemmschraube ist hierbei an dem verschiebbaren zweiten Tragkörper befestigt und steht mit einer Führungsnut des ersten Tragkörpers in Verbindung, wodurch die Klemmschraube der Verriegelungsvorrichtung ebenfalls einen Bestandteil der Führungsvorrichtung bildet. Über die Klemmschraube wird somit die Klemmfunktion und die Führungsfunktion übernommen, wobei durch das Anziehen der Klemmschraube die beiden plattenförmigen Tragkörper gegeneinander verspannt werden, bis eine ausreichende Klemmkraft erzeugt wird, um die Armlehne in einer eingestellten Position zu fixieren. Bei einer derartigen verstellbaren Armlehne sind jedoch aufgrund der Gleitführung zwischen den Lagerbolzen und den Führungsnuten der beiden Tragkörper hohe Bedienkräfte zur Verstellung der Armlehne erforderlich. Zudem weist die Armlehne während der Verstellung aufgrund der Führung der Lagerbolzen in den Führungsnuten ein Spiel auf, wodurch eine exakte Einstellung der Armlehne erschwert wird.

Aus der DE 10 2005 023 890 A1 ist eine gattungsgemäße Armlehne eines Fahrzeugs bekannt, bei der ein mit einer Armauflage versehener zweiter Tragkörper in vertikaler Richtung und in horizontaler Richtung verstellbar an einem fahrzeugseitig fest angeordneten ersten Tragkörpers verschiebbar angeordnet ist. An einen von einem Führungsteil gebildeten ersten Tragkörper ist hierzu mittels einer Gleitführung ein Gleitteil in vertikaler Richtung verschiebbar angeordnet, an dem über eine weitere Gleitführung ein den zweiten Tragkörper bildende Armlehnenkörper in horizontaler Richtung verschiebbar an dem Gleitteil angeordnet ist. Zur Verriegelung des Gleitteils gegenüber dem fahrzeugseitigen Führungsteil ist ein erster Hebelmechanismus vorgesehen, mittels dem das Gleitteil an dem Führungsteil kraftschlüssig verklemmbar ist. Zur Verriegelung des Armlehnenkörpers an dem Gleitteil ist ein zweiter Hebelmechanismus vorgesehen, mittels dem der Armlehnenkörper an dem Gleitteil kraftschlüssig verklemmbar ist. Aufgrund der Gleitführungen ergeben sich hohe Bedienkräfte zur Verstellung der Armlehne. Zudem weist die Armlehne während der Verstellung bei geöffneten Hebelmechanismen in den Gleitführungen ein Spiel auf, wodurch eine exakte Einstellung der Armlehne erschwert wird.

Aus der WO 96/335452 A, der als nächstliegender Stand der Technik betrachtet wird, ist eine Armlehne bekannt, die in einer Ausführungsvariante an zwei Stangen geführt längs verschiebbar ist.

Die EP 1 225 089 A2 offenbart eine Führung einer Armlehne an zwei Stangen, wobei die Stangen in wiederum beweglichen Hebeln geführt sind.

Der vorliegenden Erfindung liegt die Aufgabe zugrunde, eine verstellbare Armlehne der eingangs genannten Gattung zur Verfügung zu stellen, bei der sich mit geringem Bauaufwand leichte Bedienkräfte für die Verstellung ergeben und eine spielfreie Verstellung der Armlehne erzielt wird.

Diese Aufgabe wird erfindungsgemäß dadurch gelöst, dass die Führungsvorrichtung des zweiten Tragkörpers für jede Bewegungsrichtung von einer Wellenführung, die eine in einer Führungsaufnahme längsverschiebbar angeordneten Führungsstange aufweist, und von einer Flachbahnführung gebildet ist, die von ebenen Abschnitten der Verstellvorrichtung, insbesondere ebenen Abschnitten des ersten Tragkörpers und des zweiten Tragkörpers, gebildet ist. Dabei ist die Verriegelungseinrichtung im Bereich der Flachbahnführung angeordnet und umfasst eine mittels einer Klemmeinrichtung betätigbare Klemmplatte und ist die Flachbahnführung mit einer langlochartigen Führungsausnehmung versehen, in der die Klemmeinrichtung verschiebbar angeordnet ist, wobei die Klemmplatte mit den benachbart zu der Führungsausnehmung angeordneten ebenen Abschnitten zusammenwirkt.

Der erfindungsgemäße Gedanke besteht somit darin, für jede Bewegungsrichtung als Führungsvorrichtung eine Kombination aus einer Wellenführung als erste Führungsebene und einer Flachbahnführung als zweite Führungsebene vorzusehen. Mit einer Wellenführung, die aus einer Führungsstange besteht, die in einer entsprechenden Führungsaufnahme längsverschiebbar und somit in vertikaler bzw. horizontaler Verstellrichtung der Armlehne bewegbar ist, können leichte Bedienkräfte für die Verstellung der von den Tragkörper gebildeten Verstellvorrichtung relativ zueinander erzielt werden, wodurch eine leichtgängige Verstellung der Verstellvorrichtung ermöglicht wird, die eine exakte Einstellung der Armlehne ermöglicht und erleichtert. Zudem ermöglichen derartige Wellenführungen eine spielfreie Verstellung der Tragkörper zueinander und somit der Verstellvorrichtung, wodurch eine exakte Verstellung der Tragkörper und somit eine exakte vertikale und/oder horizontaler Verstellung der Armlehne auf einfache Weise ermöglicht wird. Der rotatorische Freiheitsgrad einer derartigen Wellenführung zwischen der Führungsstange und der Führungsaufnahme kann durch die Flachbahnführung auf einfache Weise ausgeglichen werden, wobei die Flachbahnführung mit geringem Bauaufwand von ebenen Abschnitten der Verstellvorrichtung und somit der Tragkörper auf einfache Weise und mit geringem Bauaufwand gebildet werden kann. Eine derartige Klemmplatte, die mittels einer Klemmeinrichtung betätigbar ist, kann auf einfache Weise und mit geringem Bauaufwand im Bereich der Flachbahnführungen angeordnet und hergestellt werden, um eine kraftschlüssige Verrieglung der Tragkörper zueinander zu erzielen. Mit derartigen Führungsausnehmungen in der entsprechenden Flachbahnführung kann auf einfache Weise erzielt werden, dass die Klemmplatte mit der Klemmeinrichtung über den Verstellbereich der Tragkörper mit der Flachbahnführung zusammenwirkt, um die Klemmkräfte zur Verriegelung der Tragkörper erzeugen zu können.

Zweckmäßigerweise ist hierzu die Führungsausnehmung parallel zu der Führungsstange angeordnet, wodurch auf einfache Weise beim Verstellen der Tragkörper entlang der Wellenführung die Klemmeinrichtung entlang der Führungsausnehmung entsprechend mitverstellt werden kann.

Hinsichtlich eines geringen Bauaufwands und einer einfachen Betätigung der Klemmeinrichtung ergeben sich Vorteile, wenn die Klemmeinrichtung einen Bolzen umfasst, der an der Klemmplatte befestigt ist und mit einem Betätigungsmittel, insbesondere einem Betätigungsgriff oder einem Betätigungshebel, versehen ist.

Der Bolzen kann hierbei mittels eines Exzenters oder einer Kurvenbahn mit der Klemmplatte verbunden sein, um die erforderlichen Klemmkräfte zu erzeugen. Ein geringer Bauaufwand mit einfachen Bauteilen kann erzielt werden, wenn der Bolzen als Klemmschraube ausgebildet ist, die in die Klemmplatte eingeschraubt ist. Mit einer als Klemmschraube ausgebildeten Klemmeinrichtung kann mit geringem Aufwand die Klemmplatte gegenüber dem entsprechenden Tragkörper verspannt werden, um die erforderlichen Klemmkräfte zu erzielen.

Mit besonderem Vorteil ist gemäß einer bevorzugten Weiterbildung der Erfindung die Führungsaufnahme mit einer Gleitlagerführung oder einer Wälzlagerführung für die Führungsstange versehen. Mit Gleitlagerbuchsen einer Gleitlagerführung oder beispielsweise als Kugelumlaufbuchsen ausgebildeter Wälzlagerführungen kann an den Wellenführungen die Reibung weiter vermindert werden und geringe Bedienkräfte der Verstellvorrichtung erzielt werden, um eine leichtgängige Führung und Verstellung der Armlehne zu erzielen.

Gemäß einer Ausführungsform der Erfindung ist der zweite Tragkörper in einer Bewegungsrichtung, insbesondere in horizontaler Richtung oder in vertikaler Richtung, verstellbar an dem ersten Tragkörper angeordnet, wobei an dem ersten Tragkörper die Führungstange lösbar befestigt ist und der zweite Tragkörper mit der Führungsaufnahme in Verbindung steht. Eine in lediglich einer Bewegungsrichtung verstellbare Armlehne weist hiedurch einen einfachen Aufbau auf und ermöglicht über die Wellenführung eine exakte und spielfreie Verstellung mit geringen Bedienkräften. Die Flachbahnführung kann hierbei von ebenen Abschnitten der beiden Tragkörper mit geringem Bauaufwand erzielt werden.

Die Klemmeinrichtung mit der Klemmplatte ist bei einer derartigen, in lediglich einer Bewegungsrichtung verstellbaren Armlehne bevorzugt an dem zweiten Tragkörper angeordnet und wirkt mit der an dem ersten Tragkörper ausgebildeten Flachbahnführung zusammen, wobei die Führungsausnehmung in dem ersten Tragkörper angeordnet ist. An einer ebenen Fläche der Flachbahnführung des ersten Tragkörpers kann die Führungsausnehmung für die an dem zweiten Tragkörper angeordnete Klemmeinrichtung auf einfache Weise hergestellt werden.

Gemäß einer bevorzugten Ausführungsform der Erfindung ist der zweite Tragkörper in zwei Bewegungsrichtungen, insbesondere in horizontaler Richtung und vertikaler Richtung, verstellbar an dem ersten Tragköper angeordnet, wobei an dem ersten Tragkörper und an dem zweiten Tragkörper jeweils eine Führungsstange lösbar befestigt ist und ein Zwischenteil vorgesehen ist, das für jede Führungsstange mit einer Führungsaufnahme versehen ist, wobei zwischen dem ersten Tragkörper und dem Zwischenteil eine Flachbahnführung und zwischen dem zweiten Tragkörper und dem Zwischenteil eine Flachbahnführung ausgebildet ist. Eine in zwei Bewegungsrichtungen verstellbare Armlehne kann mit einer ein Zwischenteil umfassenden Verstellvorrichtung, wobei an dem Zwischenteil die Führungsaufnahmen der Wellenführung angeordnet sind und das mit den ebenen Flächen zur Erzielung der Flachbahnführungen mit den beiden Tragkörpern versehen ist, mit geringem Bauaufwand und einfachen Bauteilen hergestellt werden. Die Verstellung in vertikaler Richtung kann hierbei bevorzugt durch eine Verstellung des Zwischenteils relativ zu dem ersten Tragkörper erzielt werden und die Verstellung in horizontaler Richtung durch eine entsprechende Verstellung des zweiten Tragkörpers relativ zu dem Zwischenteil.

Die Klemmeinrichtung ist hierbei bevorzugt an dem Zwischenteil angeordnet, wobei an dem ersten Tragkörper sowie dem zweiten Tragkörper jeweils eine Führungsausnehmung ausgebildet ist. Mit einer an dem Zwischenteil angeordneten Klemmeinrichtung kann auf einfache Weise eine zentrale Klemmung und eine gemeinsame Verklemmung der Tragkörper erzielt werden. In den ebenen Abschnitten der Flachbahnführungen der Tragkörper können hierbei die Führungsausnehmungen für die gemeinsame Klemmeinrichtung auf einfache Weise hergestellt werden. Hierdurch kann der Bauaufwand weiter verringert werden und der Bedienungsaufwand weiter vereinfacht und erleichtert werden, da für die Verklemmung der Tragkörper und des Zwischenteils lediglich eine Klemmeinrichtung mit einem zu betätigenden Betätigungsmittel erforderlich ist.

Eine Verklemmung der beiden Tragkörper zueinander kann bei einer derartigen in zwei Bewegungsrichtungen verstellbaren Armlehne mit einer ein Zwischenteil aufweisenden Verstellvorrichtung auf einfache Weise mit einer gemeinsamen Klemmeinrichtung als Verriegelungseinrichtung erzielt werden, wenn die Klemmeinrichtung mittels der Klemmplatte mit der Flachbahnführung des ersten Tragkörpers zusammenwirkt und mittels einer Druckplatte mit der Flachbahnführung des zweiten Tragkörpers zusammenwirkt. Mittels der Klemmplatte kann somit eine Klemmkraft zwischen dem ersten Tragkörper und dem Zwischenteil erzielt werden, um das Zwischenteil an dem ersten Tragkörper zu verklemmen. Mittels der Druckplatte kann entsprechend eine Klemmkraft zwischen dem zweiten Tragkörper und dem Zwischenteil erzeugt werden, um den zweiten Tragkörper an dem Zwischenteil zu verklemmen. Durch die Anordnung der Klemmeinrichtung an dem Zwischenteil kann somit mit geringem Bauaufwand eine gemeinsame Verriegelung durch Betätigen der Klemmeinrichtung erzielt werden.

Hinsichtlich einer einfachen Anordnung der Klemmeinrichtung an dem Zwischenteil ergeben sich Vorteile, wenn gemäß einer bevorzugten Ausgestaltungsform der Erfindung zur Aufnahme der Klemmeinrichtung das Zwischenteil mit einer Aufnahmebohrung für den Bolzen der Klemmeinrichtung versehen ist. Die von dem Bolzen gebildete Klemmeinrichtung kann in einer Aufnahmebohrung des Zwischenteils auf einfache Weise angeordnet werden.

Eine einfache Befestigung der Führungsstangen der Wellenführung ist erzielbar, wenn an dem ersten Tragkörper und/oder an dem zweiten Tragkörper Befestigungslaschen zur lösbaren Befestigung der Führungsstange ausgebildet sind. Derartige Befestigungslaschen können an dem entsprechenden Tragkörper auf einfache Weise hergestellt werden, um die Führungsstangen der Wellenführung aufzunehmen. Durch eine lösbare Befestigung der Führungstange an den Befestigungslaschen kann zudem die Montage der Wellenführungen und somit der Verstellvorrichtung der Armlehne erleichtert werden, da nach dem Einlegen der Führungsstangen in den Führungsausnehmungen die Führungsstangen an den Befestigungslaschen und somit an dem entsprechenden Tragkörper befestigt werden können.

Zweckmäßigerweise ist die Führungstange mittels Befestigungsschrauben an dem ersten Tragkörper und/oder dem zweiten Tragkörper befestigt, wodurch sich ein einfacher Bauaufwand für die lösbare Befestigung der Führungsstangen und eine vereinfachte Montage der Führungsstange erzielen lässt.

Sofern gemäß einer zweckmäßigen Weiterbildung der Erfindung zwischen dem ersten Tragkörper und dem zweiten Tragkörper bzw. zwischen dem ersten Tragkörper und dem Zwischenteil eine Federeinrichtung angeordnet ist, kann eine definierte und durch die Federeinrichtung vorgegebene Ausgangsstellung der Verstellvorrichtung vorgegeben werden. Bei einer in einer Bewegungsrichtung verstellbaren Armlehne ist die Federeinrichtung zwischen den beiden Tragkörpern angeordnet. Bei einer in zwei Bewegungsrichtungen verstellbaren Armlehne ist die Federeinrichtung bevorzugt zwischen dem ersten Tragkörper und dem Zwischenteil angeordnet, so dass durch die Federeinrichtung bei einer vertikalen Verstellung des Zwischenteils an dem ersten Tragkörper eine definierte Höhenposition der Armlehne als Ausgangsstellung vorgegeben werden kann.

Zweckmäßigerweise ist die Klemmplatte in der in dem ersten Tragkörper angeordneten Führungsausnehmung verdrehgesichert geführt, wodurch bei der Betätigung der Klemmeinrichtung eine sichere Verklemmung der beiden Tragkörper bei einer in einer Bewegungsrichtung verstellbaren Armlehne bzw. eine sichere Verklemmung des Zwischenteils an dem ersten Tragkörper bei einer in zwei Bewegungsrichtungen verstellbaren Armlehne durch die Klemmplatte erzielbar ist.

Bei einer in zwei Bewegungsrichtungen verstellbaren Armlehne kann weiterhin bei der betätigung der Klemmeinrichtung eine sichere Verklemmung des zweiten Tragkörpers an dem Zwischenteil erzielt werden, wenn die Druckplatte in der Führungsausnehmung verdrehgesichert geführt ist.

Weitere Vorteile und Einzelheiten der Erfindung werden anhand der in den schematischen Figuren dargestellten Ausführungsbeispiele näher erläutert. Hierbei zeigt
- Figur 1: eine perspektivische Darstellung eines Fahrersitzes einer mobilen Arbeitsmaschine mit einer erfindungsgemäßen, verstellbaren Armlehne,
- Figur 2: eine perspektivische Darstellung einer erfindungsgemäßen Verstellvorrichtung von der Sitzaußenseite gesehen,
- Figur 3: eine perspektivische Darstellung der erfindungsgemäßen Verstellvorrichtung von der Sitzinnenseite gesehen,
- Figur 4: den ersten Tragkörper einer erfindungsgemäßen Verstellvorrichtung,
- Figur 5: den zweiten Tragkörper einer erfindungsgemäßen Verstellvorrichtung,
- Figur 6: das Zwischenteil einer erfindungsgemäßen Verstellvorrichtung und
- Figur 7: das Zwischenteil in einer weiteren Darstellung.

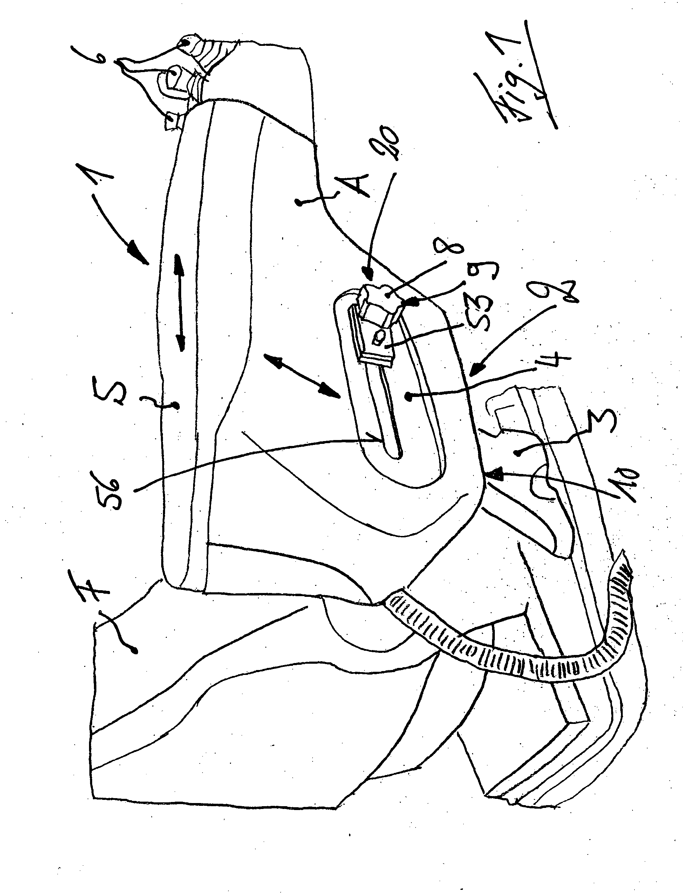

In der Figur 1 ist ein Fahrersitz F mit einer verstellbaren Armlehne 1 einer mobilen Arbeitsmaschine, beispielsweise eines als Gabelstapler ausgebildeten Flurförderzeugs dargestellt. Die Armlehne 1 ist mittels einer Verstellvorrichtung 2 in zwei Bewegungsrichtungen verstellbar angeordnet. Die erste Bewegungsrichtung dient zur Höhenverstellung der Armlehne 1 in vertikaler Richtung. Eine zweite Bewegungsrichtung dient zur Längenanpassung der Armlehne 1 in horizontaler Richtung nach vorne bzw. hinten.

Die Verstellvorrichtung 2 umfasst einen ersten Tragkörper 3, der am Fahrersitz F oder einem Rahmenbauteil befestigt ist, und einen zweiten unter einer Abdeckung A angeordneten Tragkörper 4, an dem eine Armauflage 5 angeordnet ist. An dem vorderen Bereich der Armauflage 5 sind Bedienelemente 6, beispielsweise Joysticks, angeordnet, die zur Ansteuerung einer Arbeitshydraulik des Flurförderzeugs dienen.

Der zweite Tragkörper 4 ist an dem ersten Tragkörper 3 mittels einer Führungsvorrichtung 10 in vertikaler Richtung und in horizontaler Richtung verschiebbar angeordnet. Zur Fixierung des zweiten Tragkörpers 4 bezüglich des ersten Tragkörpers 3 ist eine Verriegelungsvorrichtung 20 vorgesehen, die einen Betätigungsgriff 8, beispielsweise einen Sterngriff, als Betätigungsmittel 9 aufweist.

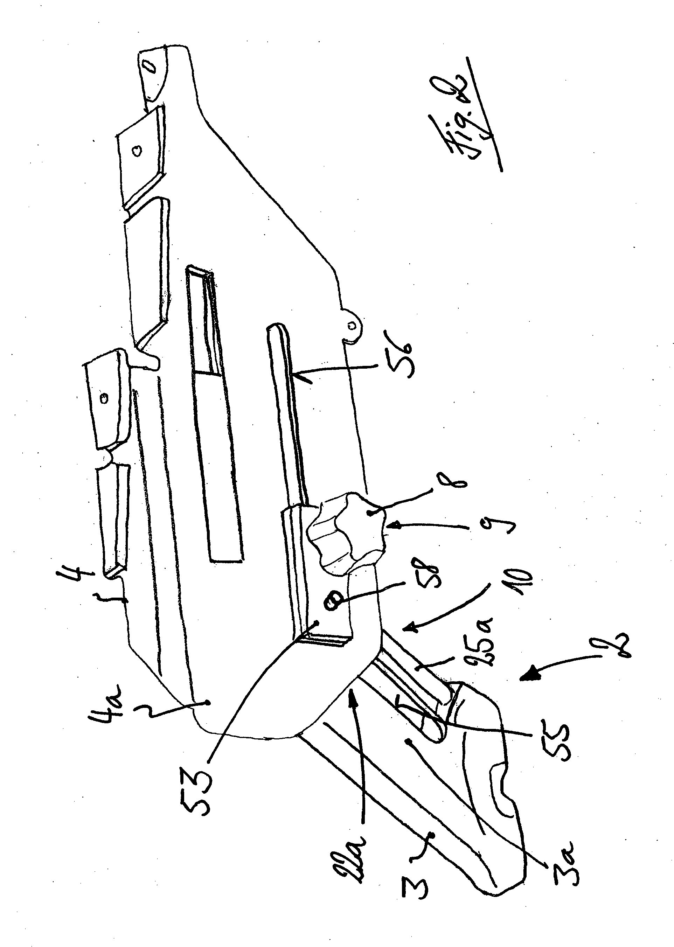

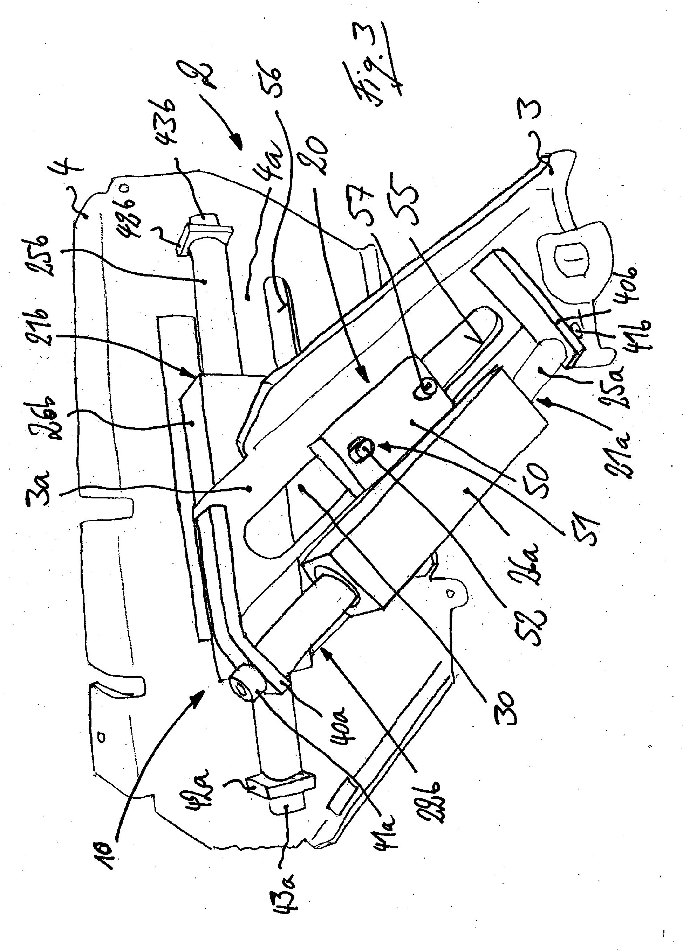

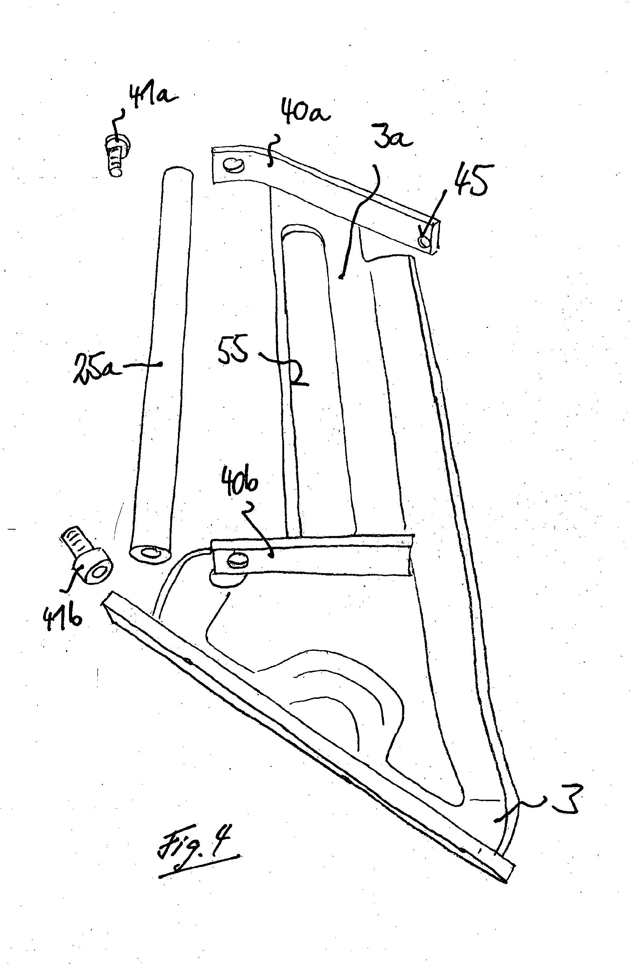

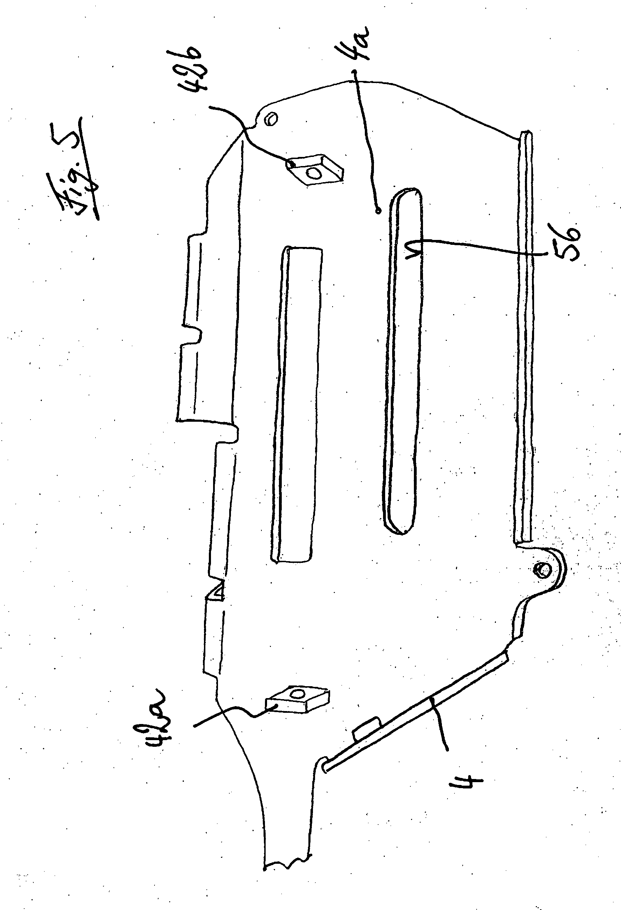

In den Figuren 2 und 3 ist die Verstellvorrichtung 2 mit der Führungsvorrichtung 10 und der Verriegelungseinrichtung 20 in einer konstruktiven Ausführungsform näher dargestellt. In den Figuren 4 bis 7 sind die Bestandteile der Verstellvorrichtung dargestellt.

Wie aus den Figuren 2 und 3 ersichtlich ist, in der die Verstellvorrichtung 2 näher dargestellt ist, umfasst die Führungsvorrichtung 10 zur Verstellung des zweiten Tragkörpers 4, an dem die Armauflage 5 angeordnet ist, in horizontaler Richtung und in vertikaler Richtung für jede Bewegungsrichtung eine Wellenführung 21a, 21b und eine der Wellenführung 21 a, 21 b zugeordnete Flachbahnführung 22a, 22b als zweite Führungsebene.

Die Wellenführung 21 a zur Verstellung des zweiten Tragkörpers 4 in vertikaler Richtung ist von einer Führungsstange 25a gebildet, die an dem ersten Tragkörper 3 lösbar befestigt ist. Die Führungsstange 25a ist in einer Führungsaufnahme 26a der Wellenführung 21a verschiebbar angeordnet, die an einem Zwischenteil 30 der Verstellvorrichtung 2 angeordnet ist, das zwischen dem ersten Tragkörper 3 und dem zweiten Tragkörper 4 angeordnet ist. Die Wellenführung 21 b zur Verstellung des zweiten Tragkörpers 4 in horizontaler Richtung ist von einer Führungsstange 25b gebildet, die an dem zweiten Tragkörper 4 lösbar befestigt ist. Die Führungsstange 21 b ist in einer entsprechenden Führungsaufnahme 26b der Wellenführung 21 b verschiebbar angeordnet, die ebenfalls an dem Zwischenteil 30 angeordnet ist.

Die Flachbahnführung 22a für die vertikale Richtung ist von ebenen Abschnitten des ersten Tragkörpers 3 und des Zwischenteils 30 gebildet, wobei der ebene Abschnitt des ersten Tragkörpers 3 von einem senkrechten Plattenabschnitt 3a an der Außenseite des ersten Tragkörpers 3 gebildet ist und der ebene Abschnitt des Zwischenteils 30 von einem ebenen Plattenabschnitt 30a an der Innenseite des Zwischenteils 30 gebildet ist.

Die Flachbahnführung 22b für die horizontale Richtung ist von ebenen Abschnitten des zweiten Tragkörpers 4 und des Zwischenteils 30 gebildet. Der ebene Abschnitt des zweiten Tragkörpers 4 ist von einem senkrechten Plattenabschnitt 4a an der Innenseite des zweiten Tragkörpers 4 gebildet ist und der ebene Abschnitt des Zwischenteils 30 von einem ebenen Plattenabschnitt 30b an der Außenseite des Zwischenteils 30 gebildet.

Zur Befestigung der Führungsstange 25a an dem ersten Tragköper 3 ist der erste Tragkörper 3 mit Befestigungslaschen 40a, 40b versehen, an denen die Führungstange 25a mit entsprechenden Befestigungsschrauben 41 a, 41 b lösbar befestigt ist.

Zur Befestigung der Führungsstange 25b an dem zweiten Tragköper 4 ist der zweite Tragkörper 4 mit entsprechenden Befestigungslaschen 42a, 42b versehen, an denen die Führungstange 26b mittels entsprechender Befestigungsschrauben 43a, 43b lösbar befestigt ist.

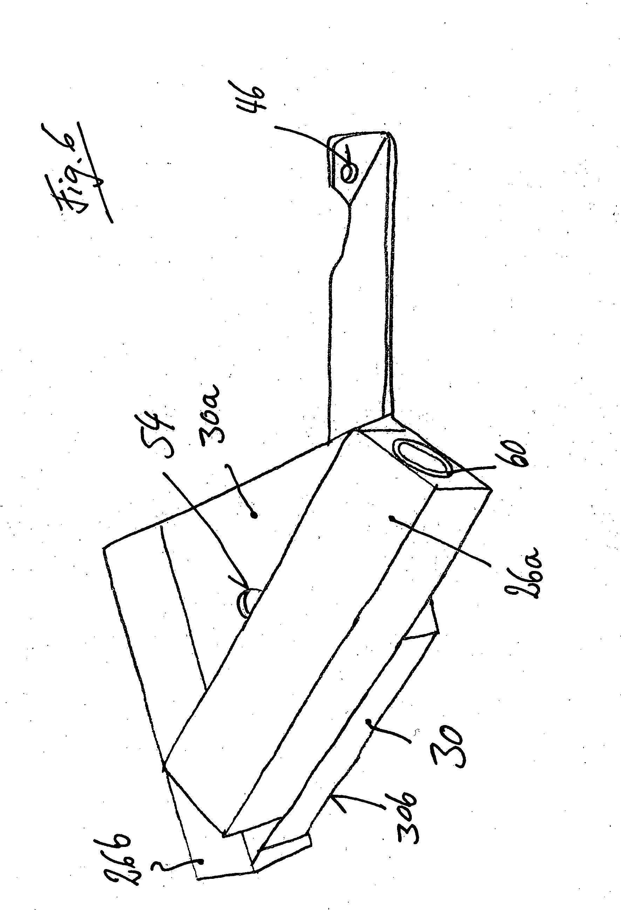

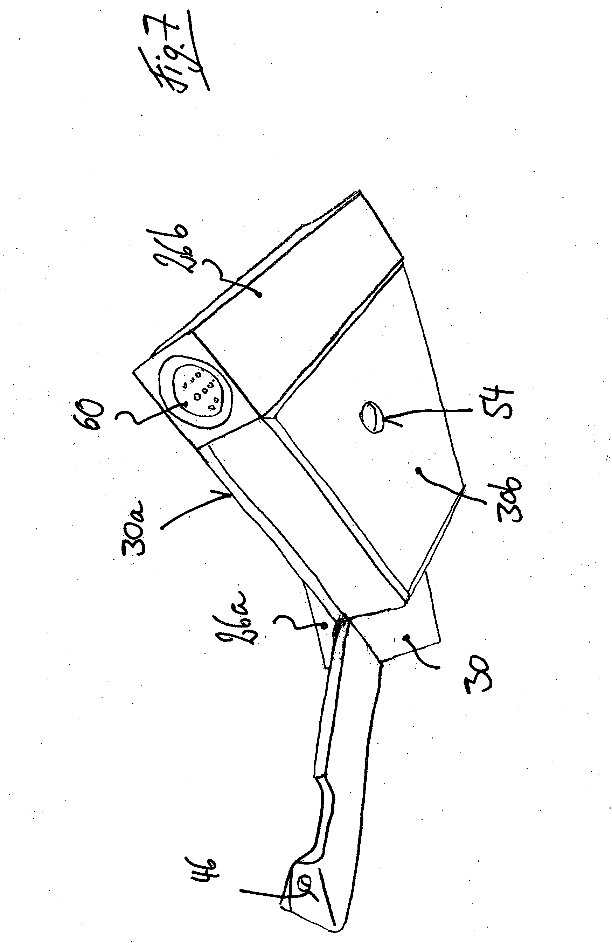

An der Befestigungslasche 40a des ersten Tragköpers 3 ist - wie in der Figur 4 dargestellt ist - weiterhin eine Befestigungsöse 45 ausgebildet, an der eine als Rückstellfeder dienende und nicht näher dargestellte Federeinrichtung eingehängt werden kann, beispielsweise eine Zugfeder. An dem Zwischenteil 30 ist für die Federeinrichtung - wie in den Figuren 6 und 7 dargestellt ist - eine weitere Befestigungsöse 46 ausgebildet.

Die Verriegelungseinrichtung 20 umfasst eine Klemmplatte 50 und eine Druckplatte 53, die mit einer Klemmeinrichtung 51 betätigt und somit verspannt werden können. Die Klemmeinrichtung 51 ist von einem Bolzen 52 gebildet, der an dem inneren Ende als Klemmschraube ausgebildet ist und in die Klemmplatte 50 eingeschraubt ist und an dem äußeren Ende das von dem Betätigungsgriff 8 gebildete Betätigungsmittel 9 trägt.

Die von dem Bolzen 52 gebildete Klemmeinrichtung 51 ist an dem Zwischenteil 30 angeordnet, wobei das Zwischenteil 30 - wie in den Figuren 6 und 7 gezeigt ist - mit einer Aufnahmebohrung 54 versehen ist, durch die sich der Bolzen 52 erstreckt.

Die von dem Bolzen 52 gebildete Klemmeinrichtung 51 ist in einer langlochartigen und nutförmigen Führungsausnehmung 55 des ersten Tragköpers 3 längsverschiebbar angeordnet, die im Bereich der Flachbahnführung 22a ausgebildet ist und in dem senkrechten Plattenabschnitt 3a des ersten Tragkörpers 3 angeordnet ist. Die Führungsausnehmung 55 ist hierbei parallel zur der an dem ersten Tragkörper 3 angeordneten Führungsstange 25a der Wellenführung 21a angeordnet.

In dem zweiten Tragkörper 4 ist im Bereich der Flachbahnführung 22b ebenfalls eine langlochartige und nutförmige Führungsausnehmung 56 für die von dem Bolzen 52 gebildete Klemmeinrichtung 51 ausgebildet, die in dem senkrechten Plattenabschnitt 4a des zweiten Tragkörpers 4 ausgebildet ist. Die Führungsausnehmung 56 ist hierbei parallel zu der an dem zweiten Tragkörper 4 angeordneten Führungsstange 25b der Wellenführung 21 b angeordnet.

Die Klemmplatte 50 ist im Bereich der Innenseite des senkrechten Plattenabschnitts 3a des ersten Tragkörpers 3 angeordnet und wirkt mit den ebenen Abschnitten der Flachbahnführung 22a benachbart zur der Führungsausnehmung 55 zusammen. Der erste Tragkörpers 3 ist somit mit dem ebenen Abschnitt 3a zwischen der Innenseite 30a des Zwischenteils 30 und der Klemmplatte 50 angeordnet, so dass beim Anziehen der Klemmeinrichtung 51 das Zwischenteil 30 an dem ersten Tragkörper 3 kraftschlüssig verklemmt wird.

Die Druckplatte 53 ist an der Außenseite des senkrechten Plattenabschnitt 4a des zweiten Tragkörpers 4 angeordnet und wirkt somit mit den ebenen Abschnitten der Flachbahnführung 22b benachbart zu der Führungsausnehmung 56 zusammen. Der zweite Tragkörper 4 ist somit mit dem ebenen Abschnitt 4a zwischen der Außenseite 30b des Zwischenteils 30 und der Druckplatte 53 angeordnet, so dass beim Anziehen der Klemmeinrichtung 51 der zweite Tragkörper 4 an dem Zwischenteil 30 kraftschlüssig verklemmt wird.

Die Klemmplatte 50 ist mittels einer Verdrehsicherung, die von einem in die Führungsausnehmung 55 ragenden Bolzen 57 gebildet ist, in der Führungsausnehmung 55 verdrehgesichert geführt. Die Druckplatte 53 ist mittels einer entsprechenden Verdrehsicherung, die von einem in die Führungsausnehmung 56 ragenden Bolzen 58 gebildet ist, in der Führungsausnehmung 56 verdrehgesichert geführt ist.

In den an dem Zwischenteil 30 angeordneten Führungsausnehmungen 26a, 26b sind - wie in den Figuren 6 und 7 gezeigt ist - jeweils Gleitlagerbuchsen, Linearlager oder Kugelumlaufbuchsen 60 angeordnet, um die Reibung in den Wellenführung 21 a, 21 b zu verringern und geringe Verstellkräfte bei der Verstellung der Armlehne 1 zu erzielen. Zudem kann hierdurch eine spielfreie Führung erzielt werden.

Die Wellenführung 21a mit der Flachführung 22a zur vertikalen Verstellung des zweiten Tragkörpers 4 und somit der Armlehne 1 ist gegenüber der Vertikalen geneigt, wodurch gleichzeitig bei einer Höhenanpassung der Armlehne 1 in vertikaler Richtung eine Längenanpassung der Armlehne 1 bezüglich des Fahrersitzes F nach vorne bzw. hinten in horizontaler Richtung erzielt werden, wodurch eine ergonomisch günstige Höhenverstellung der Armlehne erzielt wird.

Durch Lösen der von dem Bolzen 52 gebildeten Klemmeinrichtung 51 kann somit der zweite Tragkörper 4 über das Zwischenteil 30 mittels der Wellenführung 21a und der Flachbahnführung 22a in vertikaler Richtung zur Höhenverstellung der Armlehne 1 verstellt werden und gleichzeitig der zweite Tragköper 4 mittels der Wellenführung 21 b und der Flachbahnführung 22b zusätzlich in horizontaler Richtung zur Längeneinstellung der Armlehne 1 nach vorne und hinten verstellt werden. Durch die Wellenführungen 21a, 21 b wird hierbei eine leichtgängige Verstellung mit geringen Betätigungskräften und somit ein angenehmes und exaktes Verstellen des zweiten Tragkörpers 4 und somit der Armlehne 1 erzielt. In Verbindung mit den Flachbahnführungen 22a, 22b wird hierbei eine spielfreie Führung in beiden Bewegungsrichtungen und somit eine spielfreie Verstellung der Armlehne 1 erzielt.

Durch Anziehen der Klemmeinrichtung 51 wird mittels der Klemmplatte 50 ein Verklemmen des Zwischenteils 30 an dem ersten Tragkörper 3 und weiterhin ein Verklemmen des zweiten Tragkörpers 4 an dem Zwischenteil 30 erzielt, so dass eine gemeinsame Verriegelungseinrichtung 20 erzielt wird, bei der lediglich das Betätigungselement 9 betätigt werden muss, um die Fixierung der Armlehne 1 in horizontaler Richtung und in vertikaler Richtung zu erzielen.

Anstelle des Betätigungsgriffes 8 kann an dem Bolzen 52 der Klemmeinrichtung 51 ebenfalls ein Betätigungshebel angeordnet werden. Anstelle der Klemmschraube zwischen dem Bolzen 52 und der Klemmplatte 50 kann ebenfalls ein Exzenter ausgebildet werden, um die Klemmkräfte zu erzeugen.

Die Tragkörper 3 und 4 können auf einfache Weise und mit geringem Herstellaufwand aus abgekanteten Blechen hergestellt werden, wobei die ebenen Abschnitte der Flachbahnführungen 22a, 22b von den ebenen Blechanteilen der Tragkörper 3, 4 gebildet werden können. Die Befestigungslaschen 40a, 40b und 42a, 42b können ebenfalls auf einfache Weise in den Blechen ausgeschnitten und durch Umbiegen hergestellt werden oder angeschweißt werden. Das Zwischenteil 30 kann ebenfalls aus einfachen Bauteilen gebildet werden.

Durch die von den Verschraubungen gebildete lösbare Befestigung der beiden Führungsstangen 21 a, 21 b an den Befestigungslaschen 40a, 40b bzw. 42a, 42b wird weiterhin eine einfache Montage der erfindungsgemäßen Verstellvorrichtung.2 erzielt, da nach dem Einlegen der Führungstangen 25a, 25b in die Aufnahmen 26a, 26b an dem Zwischenteil 30 der erste Tragkörper 3 und der zweite Tragkörper 4 mittels der Klemmeinrichtung 51 sowie der Klemmplatte 50 und der Druckplatte 53 miteinander verbunden und aneinander befestigt werden können, so dass anschließend die Führungsstangen 25a, 25b in den entsprechenden Befestigungslaschen 40a, 40b und 42a, 42b mittels der entsprechenden Verschraubungen auf einfache Weise befestigt werden können.

## Patentansprüche

1. Verstellbare Armlehne für eine mobile Arbeitsmaschine mit einer Verstellvorrichtung, die einen ersten Tragkörper (3) und zweiten Tragkörper (4) umfasst, wobei eine Führungsvorrichtung (10) vorgesehen ist mittels der der zweite Tragkörper (4) an dem ersten Tragkörper (3) in mindestens einer Bewegungsrichtung verschiebbar angeordnet ist und eine Verriegelungseinrichtung (20) vorgesehen ist, mittels der die Tragkörper kraftschlüssig verklemmbar sind, wobei die Führungsvorrichtung (10) des zweiten Tragkörpers (4) für jede Bewegungsrichtung von einer Wellenführung (21a; 21b), die eine in einer Führungsaufnahme (26a; 26b) längsverschiebbar angeordneten Führungsstange (25a; 25b) aufweist, und von einer Flachbahnführung (22a; 22b) gebildet ist, die von ebenen Abschnitten der Verstellvorrichtung (2) gebildet ist, wobei
die Verriegelungseinrichtung (20) im Bereich der Flachbahnführung (22a; 22b) angeordnet ist und eine mittels einer Klemmeinrichtung (51) betätigbare Klemmplatte (50) umfasst und **dadurch gekennzeichnet, dass** die Flachbahnführung (22a; 22b) mit einer langlochartigen Führungsausnehmung (55; 56) versehen ist, in der die Klemmeinrichtung (51) verschiebbar angeordnet ist, wobei die Klemmplatte (50) mit den benachbart zu der Führungsausnehmung (55) angeordneten ebenen Abschnitten zusammenwirkt.

2. Verstellbare Armlehne nach Anspruch 1, **dadurch gekennzeichnet, dass** die Führungsausnehmung (55; 56) parallel zu der Führungsstange (21 a; 21 b) angeordnet ist.

3. Verstellbare Armlehne nach Anspruch 1 oder 2, **dadurch gekennzeichnet, dass** die Klemmeinrichtung (51) einen Bolzen (52) umfasst, der an der Klemmplatte (50) befestigt ist und mit einem Betätigungsmittel (9), insbesondere einem Betätigungsgriff (8) oder einem Betätigungshebel, versehen ist.

4. Verstellbare Armlehne nach Anspruch 3, **dadurch gekennzeichnet, dass** der Bolzen (52) als Klemmschraube gebildet ist, die in die Klemmplatte (50) eingeschraubt ist.

5. Verstellbare Armlehne nach einem der Ansprüche 1 bis 4, **dadurch gekennzeichnet, dass** die Führungsaufnahme (26a; 26b) mit einer Gleitlagerführung oder einer Wälzlagerführung (60) für die Führungsstange (21a; 21 b) versehen ist.

6. Verstellbare Armlehne nach einem der Ansprüche 1 bis 5, **dadurch gekennzeichnet, dass** der zweite Tragkörper (4) in einer Bewegungsrichtung, insbesondere in horizontaler Richtung oder in vertikaler Richtung, verstellbar an dem ersten Tragkörper (3) angeordnet ist, wobei an dem ersten Tragkörper (3) die Führungstange (21 a) lösbar befestigt ist und der zweite Tragkörper (4) mit der Führungsaufnahme (26a) in Verbindung steht.

7. Verstellbare Armlehne nach Anspruch 6, **dadurch gekennzeichnet, dass** die Klemmeinrichtung (51) mit der Klemmplatte (50) an dem zweiten Tragkörper (4) angeordnet ist und mit der an dem ersten Tragkörper (3) ausgebildeten Flachbahnführung (22a) zusammenwirkt, wobei die Führungsausnehmung (55) in dem ersten Tragkörper (3) angeordnet ist.

8. Verstellbare Armlehne nach einem der Ansprüche 1 bis 5, **dadurch gekennzeichnet, dass** der zweite Tragkörper (4) in zwei Bewegungsrichtungen, insbesondere in horizontaler Richtung und vertikaler Richtung, verstellbar an dem ersten Tragköper (3) angeordnet ist, wobei an dem ersten Tragkörper (3) und an dem zweiten Tragkörper (4) jeweils eine Führungsstange (21a; 21 b) lösbar befestigt ist und ein Zwischenteil (30) vorgesehen ist, das für jede Führungsstange (21a; 21b) mit einer Führungsaufnahme (26a; 26b) versehen ist, wobei zwischen dem ersten Tragkörper (3) und dem Zwischenteil (30) eine Flachbahnführung (22a) und zwischen dem zweiten Tragkörper (4) und dem Zwischenteil (30) eine Flachbahnführung (22b) ausgebildet ist.

9. Verstellbare Armlehne nach Anspruch 8, **dadurch gekennzeichnet, dass** die Klemmeinrichtung (51) an dem Zwischenteil (30) angeordnet ist, wobei an dem ersten Tragkörper (3) sowie dem zweiten Tragkörper (4) jeweils eine Führungsausnehmung (55; 56) ausgebildet ist.

10. Verstellbare Armlehne nach Anspruch 8 oder 9, **dadurch gekennzeichnet, dass** die Klemmeinrichtung (51) mittels der Klemmplatte (50) mit der Flachbahnführung (22a) des ersten Tragkörpers (3) zusammenwirkt und mittels einer Druckplatte (53) mit der Flachbahnführung (22b) des zweiten Tragkörpers (4) zusammenwirkt.

11. Verstellbare Armlehne nach Anspruch 9 oder 10, **dadurch gekennzeichnet, dass** zur Aufnahme der Klemmeinrichtung (51) das Zwischenteil (30) mit einer Aufnahmebohrung (54) für den Bolzen (52) der Klemmeinrichtung (51) versehen ist.

12. Verstellbare Armlehne nach einem der Ansprüche 1 bis 11, **dadurch gekennzeichnet, dass** an dem ersten Tragkörper (3) und/oder dem zweiten Tragkörper (4) Befestigungslaschen (40a, 40b; 42a, 42b) zur lösbaren Befestigung der Führungsstange (21 a; 21 b) ausgebildet sind.

13. Verstellbare Armlehne nach Anspruch 12, **dadurch gekennzeichnet, dass** die Führungstange (21a; 21 b) mittels Befestigungsschrauben (41 a, 41 b; 43a, 43b) an dem ersten Tragkörper (3) und/oder an dem zweiten Tragkörper (4) befestigt ist.

14. Verstellbare Armlehne nach einem der Ansprüche 1 bis 13, **dadurch gekennzeichnet, dass** zwischen dem ersten Tragkörper (3) und dem zweiten Tragkörper (4) bzw. zwischen dem ersten Tragkörper (3) und dem Zwischenteil (30) eine Federeinrichtung angeordnet ist.

15. Verstellbare Armlehne nach einem der Ansprüche 1 bis 14, **dadurch gekennzeichnet, dass** die Klemmplatte (50) in der in dem ersten Tragkörper (3) angeordneten Führungsausnehmung (55) verdrehgesichert geführt ist.

16. Verstellbare Armlehne nach einem der Ansprüche 10 bis 15, **dadurch gekennzeichnet, dass** die Druckplatte (53) in der in dem zweiten Tragkörper (4) angeordneten Führungsausnehmung (56) verdrehgesichert geführt ist.

## Claims

1. Adjustable armrest for a mobile work machine, with an adjustment apparatus which comprises a first supporting body (3) and a second supporting body (4), wherein a guide apparatus (10) is provided, by means of which the second supporting body (4) is arranged on the first supporting body (3) so as to be displaceable in at least one direction of movement, and a locking device (20) is provided, by means of which the supporting bodies can be clamped non-positively together, wherein the guide apparatus (10) of the second supporting body (4) is formed, for each direction of movement, by a shaft guide (21a; 21b) which has a guide rod (25a; 25b), which is arranged in a longitudinally displaceable manner in a guide receptacle (26a; 26b), and by a flat track guide (22a; 22b) which is formed by flat sections of the adjustment device (2), wherein the locking device (20) is arranged in the region of the flat track guide (22a; 22b) and comprises a clamping plate (50) which is actuable by means of a clamping device (51), **characterized in that** the flat track guide (22a; 22b) is provided with a slot-like guide recess (55; 56) in which the clamping device (51) is displaceably arranged, wherein the clamping plate (50) interacts with the flat sections arranged adjacent to the guide recess (55).

2. Adjustable armrest according to Claim 1, **characterized in that** the guide recess (55; 56) is arranged parallel to the guide rod (21a; 21b).

3. Adjustable armrest according to Claim 1 or 2, **characterized in that** the clamping device (51) comprises a bolt (52) which is fastened to the clamping plate (50) and is provided with an actuating means (9), in particular an actuating handle (8) or an actuating lever.

4. Adjustable armrest according to Claim 3, **characterized in that** the bolt (52) is formed as a clamping screw which is screwed into the clamping plate (50).

5. Adjustable armrest according to one of Claims 1 to 4, **characterized in that** the guide receptacle (26a; 26b) is provided with a plain bearing guide or a rolling bearing guide (60) for the guide rod (21a; 21b).

6. Adjustable armrest according to one of Claims 1 to 5, **characterized in that** the second supporting body (4) is arranged on the first supporting body (3) so as to be adjustable in one direction of movement, in particular in the horizontal direction or in the vertical direction, wherein the guide rod (21a) is fastened releasably to the first supporting body (3) and the second supporting body (4) is connected to the guide receptacle (26a).

7. Adjustable armrest according to Claim 6, **characterized in that** the clamping device (51) is arranged with the clamping plate (50) on the second supporting body (4) and interacts with the flat track guide (22a) formed on the first supporting body (3), wherein the guide recess (55) is arranged in the first supporting body (3).

8. Adjustable armrest according to one of Claims 1 to 5, **characterized in that** the second supporting body (4) is arranged on the first supporting body (3) so as to be adjustable in two directions of movement, in particular in the horizontal direction and in the vertical direction, wherein a respective guide rod (21a; 21b) is fastened releasably to the first supporting body (3) and to the second supporting body (4), and an intermediate part (30) which is provided with a guide receptacle (26a; 26b) for each guide rod (21a; 21b) is provided, wherein a flat track guide (22a) is formed between the first supporting body (3) and the intermediate part (30), and a flat track guide (22b) is formed between the second supporting body (4) and the intermediate part (30).

9. Adjustable armrest according to Claim 8, **characterized in that** the clamping device (51) is arranged on the intermediate part (30), wherein a respective guide recess (55; 56) is formed on the first supporting body (3) and on the second supporting body (4).

10. Adjustable armrest according to Claim 8 or 9, **characterized in that** the clamping device (51) interacts with the flat track guide (22a) of the first supporting body (3) by means of the clamping plate (50) and interacts with the flat track guide (22b) of the second supporting body (4) by means of a pressure plate (53).

11. Adjustable armrest according to Claim 9 or 10, **characterized in that**, in order to receive the clamping device (51), the intermediate part (30) is provided with a receiving bore (54) for the bolt (52) of the clamping device (51).

12. Adjustable armrest according to one of Claims 1 to 11, **characterized in that** fastening tabs (40a, 40b; 42a, 42b) for the releasable fastening of the guide rod (21a; 21b) are formed on the first supporting body (3) and/or on the second supporting body (4).

13. Adjustable armrest according to Claim 12, **characterized in that** the guide rod (21a; 21b) is fastened to the first supporting body (3) and/or to the second supporting body (4) by means of fastening screws (41a, 41b; 43a, 43b).

14. Adjustable armrest according to one of Claims 1 to 13, **characterized in that** a spring device is arranged between the first supporting body (3) and the second supporting body (4) or between the first supporting body (3) and the intermediate part (30).

15. Adjustable armrest according to one of Claims 1 to 14, **characterized in that** the clamping plate (50) is guided in a twist-proof manner in the guide recess (55) arranged in the first supporting body (3).

16. Adjustable armrest according to one of Claims 10 to 15, **characterized in that** the pressure plate (53) is guided in a twist-proof manner in the guide recess (56) arranged in the second supporting body (4).

## Revendications

1. Accoudoir réglable pour une machine de travail mobile, avec un dispositif de réglage, qui comprend un premier corps porteur (3) et un deuxième corps porteur (4), dans lequel il est prévu un dispositif de guidage (10), au moyen duquel le deuxième corps porteur (4) est disposé sur le premier corps porteur (3) d'une façon déplaçable dans au moins une direction de mouvement, et il est prévu un dispositif de verrouillage (20) au moyen duquel les corps porteurs peuvent être bloqués par adhérence, dans lequel le dispositif de guidage (10) du deuxième corps porteur (4) est formé pour chaque direction de mouvement par un guidage d'arbre (21a; 21b), qui présente une tige de guidage (25a; 25b) disposée en mouvement coulissant longitudinal dans un logement de guidage (26a; 26b), et par un guidage à plat (22a; 22b), qui est formé par des parties planes du dispositif de réglage (2), dans lequel le dispositif de verrouillage (20) est disposé dans la région du guidage à plat (22a; 22b) et comprend une plaque de serrage (50) actionnable au moyen d'un dispositif de serrage (51), et **caractérisé en ce que** le guidage à plat (22a; 22b) est muni d'un évidement de guidage en forme de trou oblong (55; 56), dans lequel le dispositif de serrage (51) est disposé de façon déplaçable, dans lequel la plaque de serrage (50) coopère avec les parties planes disposées à proximité de l'évidement de guidage (55).

2. Accoudoir réglable selon la revendication 1, **caractérisé en ce que** l'évidement de guidage (55; 56) est disposé parallèlement à la tige de guidage (21a; 21b).

3. Accoudoir réglable selon la revendication 1 ou 2, **caractérisé en ce que** le dispositif de serrage (51) comprend un axe (52), qui est fixé à la plaque de serrage (50) et qui est muni d'un moyen d'actionnement (9), en particulier d'une poignée d'actionnement (8) ou d'un levier d'actionnement.

4. Accoudoir réglable selon la revendication 3, **caractérisé en ce que** l'axe (52) est constitué par une vis de serrage, qui est vissée dans la plaque de serrage (50).

5. Accoudoir réglable selon l'une quelconque des revendications 1 à 4, **caractérisé en ce que** le logement de guidage (26a; 26b) est muni d'un guide à palier lisse ou d'un guide à roulement (60) pour la tige de guidage (21a; 21b).

6. Accoudoir réglable selon l'une quelconque des revendications 1 à 5, **caractérisé en ce que** le deuxième corps porteur (4) est disposé sur le premier corps porteur (3) de façon réglable dans une direction de mouvement, en particulier en direction horizontale ou en direction verticale, dans lequel la tige de guidage (21a) est fixée de façon séparable au premier corps porteur (3) et le deuxième corps porteur (4) est en liaison avec le logement de guidage (26a).

7. Accoudoir réglable selon la revendication 6, **caractérisé en ce que** le dispositif de serrage (51) est disposé avec la plaque de serrage (50) sur le deuxième corps porteur (4) et coopère avec le guidage à plat (22a) formé sur le premier corps porteur (3), dans lequel l'évidement de guidage (55) est disposé dans le premier corps porteur (3).

8. Accoudoir réglable selon l'une quelconque des revendications 1 à 5, **caractérisé en ce que** le deuxième corps porteur (4) est disposé sur le premier corps porteur (3) de façon réglable dans deux directions de mouvement, en particulier en direction horizontale et en direction verticale, dans lequel une tige de guidage (21a; 21b) est fixée de façon séparable respectivement au premier corps porteur (3) et au deuxième corps porteur (4), et il est prévu une pièce intermédiaire (30), qui est munie d'un logement de guidage (26a; 26b) pour chaque tige de guidage (21a; 21b), dans lequel un guidage à plat (22a) est formé entre le premier corps porteur (3) et la partie intermédiaire (30) et un guidage à plat (22b) est formé entre le deuxième corps porteur (4) et la pièce intermédiaire (30).

9. Accoudoir réglable selon la revendication 8, **caractérisé en ce que** le dispositif de serrage (51) est disposée sur la pièce intermédiaire (30), dans lequel un évidement de guidage (55; 56) est respectivement formé sur le premier corps porteur (3) et sur le deuxième corps porteur (4).

10. Accoudoir réglable selon la revendication 8 ou 9, **caractérisé en ce que** le dispositif de serrage (51) coopère avec le guidage à plat (22a) du premier corps porteur (3) au moyen de la plaque de serrage (50) et coopère avec le guidage à plat (22b) du deuxième corps porteur (4) au moyen d'une plaque de pression (53).

11. Accoudoir réglable selon la revendication 9 ou 10, **caractérisé en ce que** la pièce intermédiaire (30) est munie d'un alésage de réception (54) pour l'axe (52) du dispositif de serrage (51) afin de recevoir le dispositif de serrage (51).

12. Accoudoir réglable selon l'une quelconque des revendications 1 à 11, **caractérisé en ce que** des pattes de fixation (40a, 40b; 42a, 42b) sont formées sur le premier corps porteur (3) et/ou sur le deuxième corps porteur (4) pour la fixation séparable de la tige de guidage (21a; 21b).

13. Accoudoir réglable selon la revendication 12, **caractérisé en ce que** la tige de guidage (21a; 21b) est fixée au premier corps porteur (3) et/ou au deuxième corps porteur (4) au moyen de vis de fixation (41a, 41b; 43a, 43b).

14. Accoudoir réglable selon l'une quelconque des revendications 1 à 13, **caractérisé en ce qu'**un ensemble de ressort est disposé entre le premier corps porteur (3) et le deuxième corps porteur (4) ou entre le premier corps porteur (3) et la pièce intermédiaire (30).

15. Accoudoir réglable selon l'une quelconque des revendications 1 à 14, **caractérisé en ce que** la plaque de serrage (50) est guidée sans torsion dans l'évidement de guidage (55) disposé dans le premier corps porteur (3).

16. Accoudoir réglable selon l'une quelconque des revendications 10 à 15, **caractérisé en ce que** la plaque de pression (53) est guidée sans torsion dans l'évidement de guidage (56) disposé dans le deuxième corps porteur (4).
